# DEMANDE DE BREVET EUROPEEN

(11) **EP 0 626 630 A1**
(43) Date de publication de la demande: **30.11.1994**
(21) Numéro de dépôt: 94420154.0
(22) Date de dépôt: 27.05.1994
(51) Int. Cl.: G05D 23/19

(54) **Dispositif de chauffage et procédé de régulation thermique de résistance à coéfficient de température positif (CTP)**

(30) Priorité: 27.05.1993 FR 9306618
(71) Demandeur: SEB S.A., F-69130 Ecully (FR)
(72) Inventeur: Gros, Gérard, F-69720 Saint Bonnet de Mure (FR); Cubizolles, Serge, F-69007 Lyon (FR)

(57) **Abrégé**

- Dispositif et procédé de régulation thermique pour moyens de chauffe des résistances à coefficient de température positif.
- L'invention concerne un procédé de régulation thermique d'un dispositif chauffant comportant des moyens de chauffe, une sonde de température, un moteur électrique entraînant un ventilateur dans lequel on mesure en permanence la température ambiante, on transforme le signal obtenu en une tension électrique, on compare en permanence la température ambiante à une température de consigne, on transforme la différence de température en une tension électrique, on commande la vitesse de rotation du ventilateur par l'intermédiaire d'une tension d'alimentation (U) du moteur électrique, caractérisé en ce qu'il consiste à procéder au hachage de la tension d'alimentation (U) du moteur électrique.
- Application aux appareils de chauffage.

## Description

La présente invention se rapporte au domaine technique général de la régulation thermique d'éléments chauffants et notamment à des éléments chauffants comportant des résistances CTP, dites à coefficient de température positif.

La présente invention concerne un dispositif chauffant comportant des éléments chauffants du type résistances CTP, ainsi qu'une régulation thermique dudit dispositif par l'intermédiaire d'un procédé de régulation thermique.

Il a déjà été proposé dans l'art antérieur des dispositifs chauffants comportant des éléments chauffants du type résistances CTP sous forme de pastilles agencées sur des échangeurs thermiques présentant des ailettes métalliques. Ces dispositifs comportent en général des moteurs électriques entraînant des ventilateurs. Pour un dispositif chauffant comportant des résistances CTP d'une puissance nominale de 1500 watts par exemple, l'augmentation en température desdites résistances CTP ainsi que des composants qui les entourent, tel qu'un support plastique ou une grille de sortie d'air, devient très importante. Des limites technologiques de tels matériaux, ainsi que des limites normatives de différentes surfaces accessibles, imposent un seuil de température à ne pas dépasser au cours du fonctionnement du dispositif chauffant. Par conséquent, le débit d'air traversant et échangeant de l'énergie thermique avec les résistances CTP doit être maintenu à un niveau suffisant pour empêcher une augmentation trop importante en température des résistances CTP ainsi que des autres composants du dispositif chauffant. La puissance thermique, fournie par un tel dispositif ne peut donc descendre en deçà d'un certain seuil. De tels dispositifs présentent ainsi l'inconvénient majeur de dissiper constamment une puissance résiduelle de l'ordre de 800 Watts après une phase de régulation en température. Une surchauffe du local à chauffer ainsi qu'une détérioration des résistances CTP utilisées dans les éléments chauffants sont en général les conséquences négatives supplémentaires que procurent ces dispositifs.

Les éléments chauffants du type résistances CTP, bien connus, présentent des caractéristiques particulières comme, notamment, un appel de courant pouvant atteindre une valeur importante suivant la tension d'alimentation lors de la mise sous tension desdits éléments chauffants. Le courant électrique alimentant les éléments chauffants décroît jusqu'à sa valeur nominale après un intervalle de temps qui peut atteindre 5 secondes. Une coupure répétée de l'alimentation des éléments chauffants provoquerait des perturbations sur le réseau électrique qui sont réglementées et limitées par des normes précises.

En outre, un dispositif muni de moyens de coupure d'alimentation répétée des éléments chauffants revient cher, sachant que les composants électroniques correspondants sont couteux.

On connaît des moyens de régulation de vitesse de moteurs électriques par l'intermédiaire d'une modulation par angle de phase du signal d'alimentation du moteur électrique. La tension efficace d'alimentation peut ainsi être diminuée par l'utilisation d'un triac jusqu'à une tension d'alimentation minimale sensiblement égale à 150 Volts. La vitesse minimale obtenue reste cependant trop importante pour assurer une régulation thermique précise.
Une baisse accrue de la tension d'alimentation provoquerait un échauffement trop important des résistances CTP ainsi que des composants qui les entourent. On connaît également des moteurs électriques fonctionnant à courant continu, qui peuvent être alimentés par une tension très faible. Le problème lié à l'échauffement trop important des différents éléments du dispositif chauffant se poserait de la même manière. D'autre part de tels moteurs sont plus couteux et plus bruyants que des moteurs électriques connus du type, moteurs asynchrones à bague de déphasage.

Un objet de la présente invention vise à fournir un dispositif chauffant comportant des résistances CTP de faible coût et muni d'une régulation thermique précise et efficace qui permet de réduire la puissance résiduelle à un niveau de puissance réduite, de l'ordre de 300 W par exemple.

Un autre objet de la présente invention est de réaliser un dispositif chauffant simple et peu coûteux qui par l'intermédiaire d'un procédé de régulation thermique assure un fonctionnement optimal des éléments chauffants, en respectant des critères de sécurité.

Un autre objet de la présente invention vise à fournir un dispositif chauffant comportant par exemple un moteur asynchrone à bague de déphasage, permettant de contrôler à un niveau de puissance plus faible vis-à-vis des dispositifs existants, l'énergie thermique fournie par l'intermédiaire d'un débit d'air diminué.

Un autre objet de la présente invention vise à utiliser un moyen de hachage du signal d'alimentation du moteur électrique entraînant un ventilateur qui permet d'optimiser la synchronisation entre l'énergie thermique dissipée et le signal d'alimentation du moteur électrique.

Les objets assignés à l'invention sont atteints à l'aide d'un procédé de régulation thermique d'un dispositif chauffant comportant des moyens de chauffe, une sonde de température, un moteur électrique entraînant un ventilateur, dans lequel :
- on mesure en permanence la température ambiante TA par l'intermédiaire d'une sonde de température,
- on transforme le signal obtenu par l'intermédiaire de la sonde de température, en une tension électrique VA,
- on compare en permanence la température ambiante TA à une température de consigne TC par l'intermédiaire de la comparaison entre la tension VA et une tension de consigne VC correspondant à la température de consigne TC, image de la température à obtenir et fixée par l'utilisateur,
- on transforme la différence de température entre TA et TC en une tension électrique W,
- on commande la vitesse de rotation du ventilateur correspondant à la tension électrique W par l'intermédiaire d'une tension d'alimentation U correspondante du moteur électrique,

caractérisé en ce qu'il consiste :
- à procéder au hachage de la tension d'alimentation U du moteur électrique en deçà d'une valeur minimale Wm de ladite tension électrique W.

Les objets assignés à l'invention sont atteints à l'aide d'un dispositif chauffant comportant au moins un élément chauffant, au moins une sonde de température ambiante TA, un moyen de comparaison de la température ambiante TA et d'une température de consigne TC, des moyens de transformation du résultat de la comparaison en une tension électrique W également transformée, en une tension d'alimentation U d'un moteur électrique entraînant un ventilateur, un moyen d'alimentation du moteur électrique, caractérisé en ce que les éléments chauffants du type résistances CTP sont associés à un moyen de hachage de la tension d'alimentation U du moteur électrique.

D'autres particularités et avantages de l'invention apparaîtront et ressortiront plus en détail à la lecture de la description faite ci-après, en référence aux dessins annexés, donnés à titre d'exemples illustratifs et non limitatifs dans lesquels:
- la figure 1 représente le schéma fonctionnel du procédé de régulation thermique conforme à l'invention,
- la figure 2 représente le schéma du procédé de régulation de la tension d'alimentation du moteur électrique entraînant le ventilateur, conforme à l'invention.

Le dispositif chauffant conforme à l'invention comporte des moyens de chauffe pouvant être constitués d'un ou plusieurs éléments chauffants du type résistances CTP. Les éléments chauffants sont avantageusement agencés sur des échangeurs thermiques à ailettes. Les éléments chauffants sont associés les uns aux autres d'unemanière préférentielle selon un exemple de montage classique tel que celui utilisé pour les éléments chauffants commercialisé par la société EICHEN-AUER du type 6283-33, et destinés à fournir une puissance nominale de 2000 Watts pour 3 éléments chauffants.

Selon une variante de réalisation du dispositif conforme à l'invention, ce dernier peut comporter des éléments chauffants destinés à fournir une puissance nominale de 1500 Watts par exemple. Il est également envisageable conformément à la présente invention, d'utiliser d'autres éléments chauffants du type résistances thermovariables. Une résistance thermovariable doit être comprise comme étant un élément chauffant électrique dont la résistance électrique varie avec la température pour faire varier la dissipation thermique.

Dans la description qui va suivre il sera fait référence à un dispositif chauffant comportant 3 éléments chauffants fournissant une puissance nominale de 2000 Watts, mais il est évident qu'un dispositif conforme à l'invention ne se limite pas à cette conception particulière.

Le dispositif conforme à l'invention comporte également un moteur électrique de préférence asynchrone à bague de déphasage, un ventilateur, une sonde de température et un moyen d'alimentation des éléments chauffants. La sonde de température est agencée sur le dispositif chauffant de manière à lire la température ambiante, dans le flux d'air aspiré par le ventilateur. Ce dernier est de préférence monté sur roulements. Cette caractéristique confère au ventilateur une constante de temps accrue et par conséquent un meilleur confort sonore lors de coupures répétées du signal d'alimentation du moteur électrique, notamment au cours d'une étape de hachage dudit signal d'alimentation. Le moyen d'alimentation des éléments chauffants est réalisé directement par une connexion au secteur. Ce moyen d'alimentation est réalisé par l'intermédiaire d'un circuit électronique pour les éléments chauffants qui seront déconnectés au cours du procédé de régulation thermique.

Si le dispositif conforme à l'invention ne comporte par exemple qu'un seul élément chauffant, ce dernier est avantageusement constitué de plusieurs branchements électriques, correspondants à plusieurs puissances de chauffe possibles. De cette manière une partie de l'élément chauffant est coupée ou débranchée de l'alimentation électrique au cours d'une régulation thermique.

Le dispositif conforme à l'invention comporte également un moyen de hachage du signal d'alimentation du moteur électrique. Ce moyen est fourni par un circuit électronique connu qui permet de couper l'alimentation du moteur électrique selon une cadence déterminée par la structure particulière du circuit électronique.

Le dispositif conforme à l'invention comporte également des moyens permettant d'obtenir une régulation par angle de phase de l'alimentation du moteur électrique.

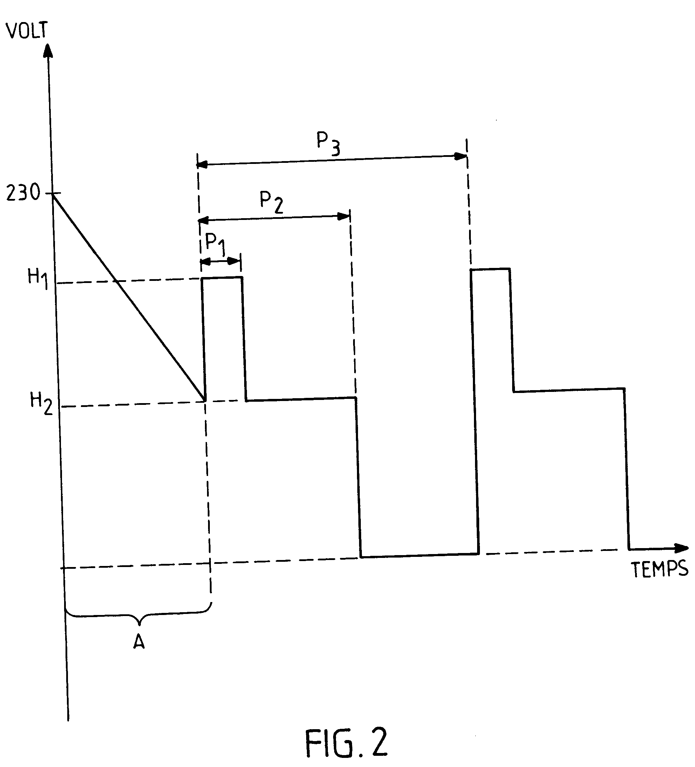

Selon une variante préférentielle de réalisation du dispositif conforme à l'invention, le moyen de hachage fournit un signal tel que représenté à la figure 2 et présentant un créneau haut et bas dans une période dudit signal.

La fréquence du signal de hachage est comprise entre 0,5 et 0,7 hertz et de préférence égale à 0,53 hertz. Ce qui correspond à une valeur préférentielle de la période P3 dudit signal de hachage égale à 1,9 secondes.

Le créneau haut et le créneau bas correspondent respectivement à une alimentation et à une coupure d'alimentation du moteur électrique. Le signal de hachage, tel que représenté à la figure 2, présente un créneau haut H2 modulable en durée P2 et en amplitude. Cette dernière est comprise entre 120 et 160 volts et de préférence égale à 150 volts. Le créneau haut H2 correspond également à la tension d'alimentation U minimale pour faire tourner le moteur électrique. La durée P2 varie entre 0,5 et 1,55 secondes de préférence et présente une série d'au moins huit durées différentes accessibles, en fonction de l'écart entre la température ambiante TA et la température de consigne TC. La sensibilité de réglage des durées P2 est entièrement déterminée par un circuit électronique.

Le créneau haut H2 présente un créneau H1 correspondant à une tension U plus importante comprise entre 160 et 230 volts, de préférence égale à 180 volts, et pendant une durée P1 comprise entre 0,05 et 0,15 secondes et de préférence égale à 0,1 secondes.

Le moyen de hachage permet ainsi pendant la durée P1 d'appliquer une tension U d'alimentation du moteur électrique suffisante pour le relancer.

La période P3 ainsi que les durées P1, P2 du signal de hachage sont modulables en fonction du type de ventilateur et du type de moteurs électriques utilisés. De cette manière une synchronisation optimale entre l'énergie thermique dissipée et le signal d'alimentation du moteur électrique est obtenue.

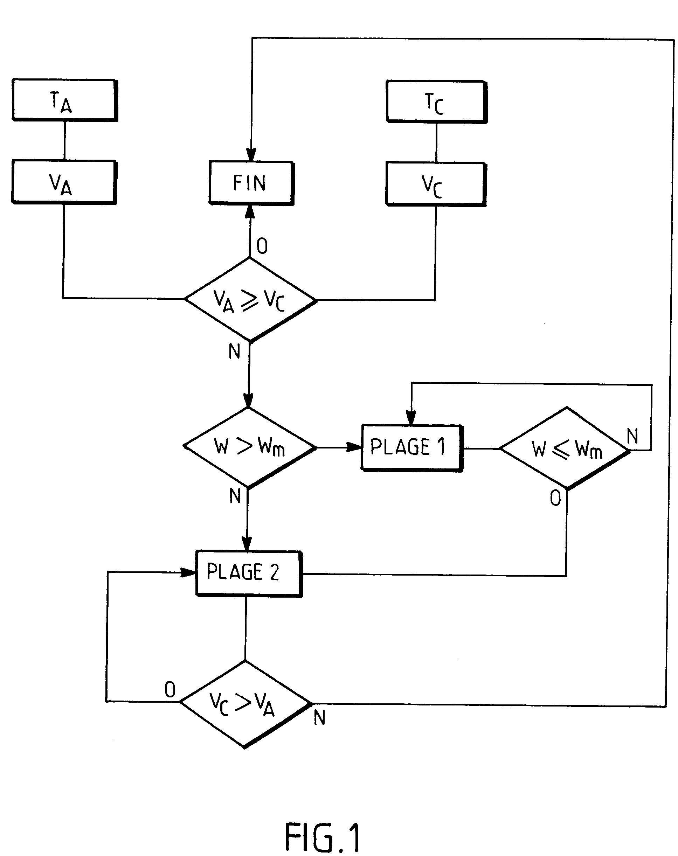

Selon un mode préférentiel de réalisation, le procédé de régulation thermique, schématisé à la figure 1 consiste en un certain nombre d'étapes décrites ci-après.

Le procédé de régulation thermique consiste à mesurer en permanence la température ambiante TA par l'intermédiaire d'une sonde de température. Avantageusement, la température lue par la sonde sera la température de l'air aspiré par le ventilateur entraîné par le moteur électrique.

La température ambiante TA est dans un premier temps convertie en tension électrique VA, puis comparée à une température de consigne TC par l'intermédiaire de la comparaison entre la tension VA et une tension de consigne VC correspondant à la température de consigne TC, image de la température à obtenir fixée par l'utilisateur.

La différence entre la température TA et la température TC est également transformée ou traduite en tension électrique W.

Le procédé de régulation thermique, conforme à l'invention comprend également une étape qui consiste à commander une vitesse de rotation du ventilateur correspondant à la tension électrique W par l'intermédiaire d'une tension d'alimentation U du moteur électrique. La correspondance entre la tension électrique W et la tension d'alimentation U est réalisée par exemple par une simple relation de proportionnalité ou par une fonction mathématique élaborée et complexe.

La tension électrique W présente une valeur minimale Wm qui délimite deux plages de tensions, et par conséquent deux phases de régulation, l'une avec une tension W supérieure à Wm, l'autre avec une tension W inférieure à Wm. La tension Wm est fixée par le constructeur.

La valeur minimale Wm de la tension électrique W correspond à une tension comprise entre 150 et 160 volts et à une puissance dissipée comprise entre 1100 et 1250 watts, et de préférence égale à 1150 watts.

Ainsi, la plage de tensions supérieures à Wm correspond à une situation dans laquelle l'alimentation U du moteur électrique est réglée par angle de phase par l'intermédiaire d'au moins un triac disposé dans un circuit électronique de régulation.

Ainsi le moyen de hachage de la tension d'alimentation U du moteur électrique est associé à un moyen de régulation par angle de phase de la tension d'alimentation U pour obtenir une régulation par angle de phase lorsque la tension électrique W est supérieure à une valeur minimale Wm de ladite tension électrique W.

Dans la plage de tensions inférieures à Wm, la tension d'alimentation U du moteur électrique a atteint une valeur efficace minimale de fonctionnement du moteur électrique.

La modulation de la tension d'alimentation U est alors obtenue par un moyen de hachage de ladite tension.

Dans les deux cas mentionnés, la variation de la vitesse du ventilateur est le paramètre essentiel de la régulation thermique visée. La variation de débit d'air au travers des éléments chauffants du type résistances CTP détermine ainsi la puissance thermique dissipée. Les différentes vitesses de rotation du ventilateur accessibles dans les deux plages de régulation respectivement inférieure et supérieure à la tension électrique Wm, sont déterminées par un circuit électronique connu et correspondant à des séries d'au moins huit valeurs de puissance de chauffe dans chaque plage de régulation.

En outre, dans la plage de tensions inférieures à Wm, le moyen de hachage de la tension d'alimentation U est associé à un moyen de coupure d'alimentation d'au moins une partie des moyens de chauffe. Une réduction de la puissance thermique dégagée par les moyens de chauffe est ainsi obtenue, ce qui se traduit d'une part par une régulation thermique plus précise et d'autre part par une température d'échauffement limitée des résistances CTP et des différents composants du dispositif chauffant. La coupure d'alimentation d'au moins un élément chauffant intervient en deçà d'une puissance dissipée limite RL comprise entre 700 et 850 Watts, et de préférence égale à 800 Watts. Ladite coupure d'au moins un élément chauffant peut être remplacée par une coupure d'alimentation d'au moins une partie d'au moins un élément chauffant.

La fin de la régulation thermique est obtenue pour une température ambiante TA supérieure ou égale à la température de consigne TC et elle se traduit par une puissance résiduelle dissipée après les étapes de régulation thermique, comprise entre 300 et 400 Watts.

Le procédé de régulation thermique est remis en oeuvre automatiquement après un écart entre la température de consigne TC et la température ambiante TA; TC étant supérieure à TA. La dérive minimale en température doit être de préférence comprise entre 0,5 et 1,5 °C pour déclencher la régulation thermique.

Selon un mode préférentiel de fonctionnement, la régulation thermique est mise en oeuvre de la manière décrite ci-après.

L'utilisateur règle une température de consigne en arrivant dans une pièce froide, ce qui correspond à une température ambiante TA nettement inférieure à la température de consigne TC. Le dispositif chauffant d'une puissance nominale de l'ordre de 2000 Watts fonctionne ainsi à pleine puissance. Au fur et à mesure que la température ambiante TA augmente, la tension efficace d'alimentation du moteur électrique entraînant le ventilateur diminue jusqu'à une valeur de l'ordre de 150 Volts. Cette phase de régulation correspond à la phase référencée A à la figure 2.

La deuxième phase de régulation thermique correspond au hachage du signal d'alimentation U du moteur électrique. Le hachage est commandé par un circuit électronique à partir d'un écart en température entre TA et TC suffisamment faible. Ce dernier correspond à la tension électrique Wm définie dans le procédé de régulation thermique. Dans cette seconde phase de régulation thermique, la puissance thermique dissipée est contrôlée par une modulation du signal de hachage. Au cours de cette modulation intervient également la coupure d'au moins un élément chauffant qui permet de diminuer la puissance du dispositif chauffant jusqu'à un niveau de l'ordre de 300 à 400 Watts quand la valeur de la température TA a atteint la valeur de la température de consigne TC.

Un avantage du dispositif et du procédé de régulation thermique conforme à l'invention est qu'il permet de limiter la puissance résiduelle de fonctionnement à un niveau de puissance réduit, de l'ordre de 300 Watts par exemple. Une surchauffe du local à chauffer est réduite et la durée de vie des résistances CTP constituant les éléments chauffants est augmentée. La consommation en courant électrique se trouve réduite par la même occasion.

Un autre avantage de la présente invention réside dans l'utilisation de moyens connus et peu couteux pour réaliser un dispositif chauffant associé à un procédé de régulation thermique fiable et précis.

Un avantage supplémentaire de la présente invention est que les performances atteintes par un dispositif et procédé conforme à l'invention n'altèrent en aucune manière le confort sonore lié à l'utilisation d'un moteur électrique, entraînant un ventilateur, et associé à un moyen de hachage du signal d'alimentation dudit moteur électrique.

Un avantage complémentaire de la présente invention est que le procédé de régulation thermique s'adapte à un dispositif chauffant conforme à l'invention, dans lequel le nombre d'éléments chauffants ainsi que la puissance nominale sont différents suivant les variantes de réalisation considérées.

## Revendications

1. Procédé de régulation thermique d'un dispositif chauffant comportant des moyens de chauffe, une sonde de température, un moteur électrique entraînant un ventilateur, dans lequel :
- on mesure en permanence la température ambiante (TA) par l'intermédiaire d'une sonde de température,
- on transforme le signal obtenu par l'intermédiaire de la sonde de température, en une tension électrique (VA),
- on compare en permanence la température ambiante (TA) à une température de consigne (TC)par l'intermédiaire de la comparaison entre la tension (VA) et une tension de consigne (VC) correspondant à la température de consigne (TC), image de la température à obtenir et fixée par l'utilisateur,
- on transforme la différence de température entre (TA) et (TC) en une tension électrique (W)
- on commande la vitesse de rotation du ventilateur correspondant à la tension électrique (W) par l'intermédiaire d'une tension d'alimentation (U) correspondante du moteur électrique,
caractérisé en ce qu'il consiste:
- à procéder au hachage de la tension d'alimentation (U) du moteur électrique en deçà d'une valeur minimale (Wm) de ladite tension électrique (W).

2. Procédé de régulation thermique selon la revendication 1 caractérisé en ce qu'il consiste :
- à faire varier le débit d'air produit par le ventilateur, au travers des moyens de chauffe du type résistances CTP, par l'intermédiaire d'une régulation par angle de phase de la tension d'alimentation (U) du moteur électrique.

3. Procédé de régulation thermique selon l'une des revendications 1 ou 2 caractérisé en ce qu'il consiste :
- à procéder au hachage de la tension d'alimentation (U) du moteur électrique après l'étape consistant à faire varier le débit d'air produit par le ventilateur, en fonction de la tension d'alimentation (U) du moteur électrique, contrôlée par angle de phase.

4. Procédé dé régulation thermique selon l'une des revendications 1 à 3 caractérisé en ce qu'il consiste :
- à procéder au hachage de la tension d'alimentation (U) du moteur électrique pour une puissance dissipée comprise entre 1100 et 1250 Watts.

5. Procédé de régulation thermique selon l'une des revendications 1 à 4, caractérisé en ce qu'il consiste :
- à couper l'alimentation d'au moins une partie des moyens de chauffe en deçà d'une puissance dissipée limite (RL) , fixée par le constructeur.

6. Procédé de régulation thermique, selon la revendication 5 caractérisé en ce qu'il consiste :
- à couper l'alimentation d'au moins une partie des moyens de chauffe, au cours de l'étape consistant à hacher le signal d'alimentation (U) du moteur électrique.

7. Procédé de régulation thermique selon l'une des revendications 1 à 6 caractérisé en ce qu'il consiste :
- à utiliser plusieurs éléments chauffants individualisés
- à couper l'alimentation d'au moins une partie d'au moins un élément chauffant.

8. Procédé de régulation thermique, selon l'une des revendications 5 à 7 caractérisé en ce qu'il consiste :
- à couper au moins partiellement l'alimentation d'au moins un élément chauffant en deçà d'une puissance dissipée limite (RL) comprise entre 700 et 850 Watts.

9. Dispositif chauffant comportant au moins un élément chauffant, au moins une sonde de température ambiante (TA), un moyen de comparaison de la température ambiante (TA) et d'une température de consigne (TC), des moyens de transformation du résultat de la comparaison en une tension électrique (W) également transformée, en une tension d'alimentation (U) d'un moteur électrique entraînant un ventilateur, un moyen d'alimentation du moteur électrique, caractérisé en ce que les éléments chauffants du type résistances CTP sont associés à un moyen de hachage de la tension d'alimentation (U) du moteur électrique.

10. Dispositif selon la revendication 9 caractérisé en ce que le moyen de hachage de la tension d'alimentation (U) du moteur électrique est associé à un moyen de régulation par angle de phase de la tension d'alimentation (U) pour obtenir une régulation par angle de phase lorsque la tension électrique (W) est supérieure à une valeur minimale (Wm) de ladite tension électrique (W).

11. Dispositif chauffant selon la revendication 9 ou 10 caractérisé en ce que les éléments chauffants sont agencés sur des échangeurs thermiques à ailettes.

12. Dispositif chauffant selon l'une des revendications 9 à 11 caractérisé en ce que le moyen de hachage fournit un signal présentant une fréquence comprise entre 0,5 et 0,7 hertz.

13. Dispositif chauffant selon l'une des revendications 9 à 12 caractérisé en ce que le moteur électrique entraînant un ventilateur est un moteur asynchrone à bague de déphasage.
